# EUROPÄISCHE PATENTSCHRIFT

(11) **EP 3 947 004 B1**
(45) Veröffentlichungstag und Bekanntmachung des Hinweises auf die Patenterteilung: **28.02.2024**
(21) Anmeldenummer: 20711560.1
(22) Anmeldetag: 11.03.2020
(51) Int. Cl.: B60K 35/00, B60K 37/06, B60H 1/00, G06F 3/0481

(54) **VERFAHREN ZUM BETREIBEN EINER BEDIENVORRICHTUNG FÜR EIN KRAFTFAHRZEUG UND BEDIENVORRICHTUNG FÜR EIN KRAFTFAHRZEUG**
METHOD FOR OPERATING AN OPERATOR CONTROL DEVICE FOR A MOTOR VEHICLE AND OPERATOR CONTROL DEVICE FOR A MOTOR VEHICLE
PROCÉDÉ POUR FAIRE FONCTIONNER UN DISPOSITIF DE COMMANDE CONÇU POUR UN VÉHICULE AUTOMOBILE ET DISPOSITIF DE COMMANDE CONÇU POUR UN VÉHICULE AUTOMOBILE

(30) Priorität: 25.03.2019 DE 102019204043
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: JUN, Mi-Ran, 10965 Berlin (DE); LOU, Jian, 10707 Berlin (DE); BUDZYNSKI, Tobias, 13503 Berlin (DE); YOSHA, Omer, 10827 Berlin (DE); WAGNER, Volkmar, 10965 Berlin (DE); KUHN, Mathias, 14129 Berlin (DE); HELMICH, Ontje, 14059 Berlin (DE); PETERSEN, Sönke, 12205 Berlin (DE)
(86) Internationale Anmeldenummer: PCT/EP2020/056569
(87) Internationale Veröffentlichungsnummer: WO 2020/193149

(56) Entgegenhaltungen:
- EP-A1- 2 955 614
- EP-A2- 2 960 099
- DE-A1-102010 034 541
- US-A1- 2007 052 545
- US-A1- 2014 365 928
- US-A1- 2018 018 080
- Mathias Urban: "New BMW Cockpit is digital, intelligent, perfectly tuned to the driver and always up-to-date.", , 28. September 2018 (2018-09-28), XP055695650, Gefunden im Internet: URL:https://www.press.bmwgroup.com/global/ article/detail/T0285445EN/new-bmw-cockpit- is-digital-intelligent-perfectly-tuned-to- the-driver-and-always-up-to-date?language= en [gefunden am 2020-05-14]

## Beschreibung

Die Erfindung betrifft ein Verfahren zum Betreiben einer Bedienvorrichtung für ein Kraftfahrzeug und eine Bedienvorrichtung für ein Kraftfahrzeug.

Es sind Bedienvorrichtungen in Form von Touchscreens bekannt, bei denen mittels eines Betätigungselements, z.B. einem Finger eines Nutzers, ein auf einer Anzeige des Touchscreens dargestelltes virtuelles Bedienelement zum Auslösen einer Funktion betätigt werden kann.

Aus der US 2014 / 0 365 928 A1 ist ein Verfahren bekannt, das auf einem interaktiven System eines Fahrzeugs mit einer berührungsempfindlichen Anzeige ausführbar ist, wobei die berührungsempfindliche Anzeige eine Bildschirmkonfiguration umfasst, die in einen Hauptbereich und eine Vielzahl von Verknüpfungsbereichen unterteilt ist. Jeder Verknüpfungsbereich kann einer entsprechenden einer Vielzahl von Anwendungen und einer vorgewählten Funktion jeder Anwendung zugeordnet werden. Das Verfahren kann das Anzeigen einer Darstellung jeder der Vielzahl von Anwendungen in einem entsprechenden der Verknüpfungsbereiche, das Anzeigen von Informationen über eine der Vielzahl von Anwendungen im Hauptbereich, wobei mindestens zwei Anwendungen laufen, und das Ausführen von einer vorausgewählten Funktion einer Anwendung umfassen, wenn eine erste Art von Fingergeste eines Benutzers erkannt wird, unabhängig davon, ob die erste Art von Fingergeste im Hauptbereich oder in einem Verknüpfungsbereich ausgeführt wird.

Aus der US 2018 / 0 018 080 A1 ist ein Verfahren zum Betreiben eines Bediensystems bekannt, bei dem Grafikdaten einer grafischen Benutzeroberfläche erzeugt werden, wobei die grafische Benutzeroberfläche eine Benutzeroberflächenerstreckung entlang einer ersten Richtung aufweist und eine Anzeigeeinheit einen Ausschnitt der grafischen Benutzeroberfläche anzeigt, wobei der Ausschnitt eine Ausdehnung entlang der ersten Richtung hat. Das Bediensystem weist mindestens zwei Zustände auf, wobei jedem Zustand ein spezifischer Ausschnitt der grafischen Benutzeroberfläche zugeordnet ist. Wenn einer der mindestens zwei Zustände des Bediensystems aktiviert ist, wird der dem aktivierten Zustand zugeordnete Ausschnitt der grafischen Benutzeroberfläche angezeigt und ein Zustandsinformationselement betätigt, sodass der aktivierte Zustand des Bediensystems ausgegeben wird. Das Zustandsinformationselement enthält einen Umriss einer geometrischen Figur, und der aktivierte Zustand ist eine Basis zum Hervorheben eines Segments des Umrisses.

Aus der US 2007 / 0 052 545 A1 ist ein Bordsteuersystem, insbesondere für Kraftfahrzeuge, bekannt, mit einem Steuergerät, Tasten und einem Computer, der nach Betätigung der Tasten mit der selektiven Ausführung der Steuerungsfunktionen des Bordgeräts reagiert, wobei der Computer in der Lage ist, ein Anzeigegerät zu steuern, um die Tasten anzuzeigen und auf die Betätigung mindestens einer ersten Taste zu reagieren durch Neuzuweisung von Steuerfunktionen der Bordvorrichtung zu zweiten Tasten, während die Anzeige der zweiten Tasten aktualisiert wird, um die damit verbundene Funktion anzuzeigen.

Aus der DE 10 2010 034 541 A1 ist ein Verfahren zum Bereitstellen einer Benutzerschnittstelle bekannt, insbesondere in einem Fahrzeug, mit einer Anzeigevorrichtung zum Anzeigen von graphischen Objekten, die zugeordnete Datenobjekte repräsentieren. Das Verfahren umfasst folgende Schritte: Ein erstes graphisches Objekt wird in einem ersten Anzeigebereich dargestellt, wobei das dem ersten graphischen Objekt zugeordnete Datenobjekt zu einer ersten Anwendung gehört, und das erste graphische Objekt wird mittels einer Bedienvorrichtung von dem ersten Anzeigebereich in einen zweiten Anzeigebereich verschoben, woraufhin das dem ersten graphischen Objekt zugeordnete Datenobjekt unabhängig von der ersten Anwendung gespeichert wird. Ferner ist eine entsprechende Vorrichtung zum Ausführen dieses Verfahrens bekannt.

Aus der EP 2 955 614 A1 sind eine Anwenderschnittstelle sowie ein Verfahren zum Anpassen einer semantischen Skalierung einer Kachel auf einer Anzeigeeinheit einer Anwenderschnittstelle bekannt. Das Verfahren umfasst die Schritte: Darstellen einer ersten Kachel umfassend eine erste Vielzahl Schaltflächen, Erfassen eines Anwenderbefehls zur vergrößerten Darstellung der ersten Kachel und im Ansprechen darauf, vergrößertes Darstellen der ersten Kachel umfassend eine zweite Vielzahl Schaltflächen.

Aus der EP 2 960 099 A2 sind eine Anwenderschnittstelle sowie ein Verfahren zum Anpassen einer Einstellung eines Fortbewegungsmittels mittels einer Anzeigeeinheit einer Anwenderschnittstelle des Fortbewegungsmittels bekannt. Das Verfahren umfasst die Schritte: Darstellen eines ersten Bedienelementes zur Bedienung der Einstellung für die Fahrerposition oder für die Beifahrerposition des Fortbewegungsmittels auf der Anzeigeeinheit, Darstellen einer vordefinierten Schaltfläche auf der Anzeigeeinheit, Empfangen einer Anwendereingabe bezüglich der vordefinierten Schaltfläche, und im Ansprechen darauf, Darstellen eines zweiten Bedienelementes zur Bedienung der Einstellung für die Fahrerposition und die Beifahrerposition des Fortbewegungsmittels.

Das Darstellen von Informationen und ein Zugriff auf relevante Funktionen eines Kraftfahrzeugs über eine solche Bedienvorrichtung sind derzeit nur unbefriedigend gelöst.

Der Erfindung liegt die Aufgabe zu Grunde, ein Verfahren zum Betreiben einer Bedienvorrichtung für ein Kraftfahrzeug und eine Bedienvorrichtung für ein Kraftfahrzeug zu verbessern.

Die Aufgabe wird erfindungsgemäß durch ein Verfahren mit den Merkmalen des Patentanspruchs 1 und eine Bedienvorrichtung mit den Merkmalen des Patentanspruchs 7 gelöst. Vorteilhafte Ausgestaltungen der Erfindung ergeben sich aus den Unteransprüchen.

Insbesondere wird ein Verfahren zum Betreiben einer Bedienvorrichtung für ein Kraftfahrzeug zur Verfügung gestellt, wobei die Bedienvorrichtung eine berührungsempfindliche Anzeige- und Bedieneinrichtung und eine Steuereinrichtung zum Steuern der Anzeige- und Bedieneinrichtung umfasst, wobei in einem ausgewählten Bereich auf der Anzeige- und Bedieneinrichtung ein Notifikationsbereich dargestellt wird, wobei in dem Notifikationsbereich mindestens ein virtuelles Bedienelement zum Abrufen von mindestens einer bereitgestellten Nachricht dargestellt wird, und wobei in dem ausgewählten Bereich ferner ein Klimabereich dargestellt wird, wobei in dem Klimabereich mindestens eine Klimainformation und mindestens ein virtuelles Bedienelement zum Aufrufen einer Klimakonfiguration dargestellt werden.

Ferner wird eine Bedienvorrichtung für ein Kraftfahrzeug geschaffen, umfassend eine berührungsempfindliche Anzeige- und Bedieneinrichtung und eine Steuereinrichtung zum Steuern der Anzeige- und Bedieneinrichtung, wobei die Steuereinrichtung derart ausgebildet ist, in einem ausgewählten Bereich der Anzeige- und Bedieneinrichtung einen Notifikationsbereich und einen Klimabereich darzustellen, und in dem Notifikationsbereich mindestens ein virtuelles Bedienelement zum Abrufen von bereitgestellten Nachrichten darzustellen und in dem Klimabereich mindestens eine Klimainformation und mindestens ein virtuelles Bedienelement zum Aufrufen einer Klimakonfiguration darzustellen.

Die Erfindung ermöglicht es, wichtige Informationen unmittelbar in einem ausgewählten Bereich darzustellen und von dort aus zum Abrufen bereitzustellen. Im ausgewählten Bereich ist hierzu ein Notifikationsbereich vorgesehen, in dem ein virtuelles Bedienelement dargestellt ist, über das bereitgestellte Nachrichten abgerufen werden können. Ferner ist in dem ausgewählten Bereich ein Klimabereich vorgesehen, in dem mindestens einen Klimainformation und mindestens ein virtuelles Bedienelement zum Aufrufen einer Klimakonfiguration dargestellt werden. Die Klimakonfiguration bezeichnet hierbei eine Konfiguration bzw. Konfigurationsparameter eines Klimasystems des Kraftfahrzeugs. Einem Nutzer im Kraftfahrzeug werden auf diese Weise wichtige Informationen unmittelbar zur Verfügung gestellt und darüber hinaus eine Bedienung durch einen direkten und unmittelbaren Zugriff auf wichtige Funktionen vereinfacht. Eine umständliche Navigation in Untermenüs, wie sie derzeit üblich ist, um Nachrichten abzurufen oder eine Klimakonfiguration zu ändern, ist nicht mehr notwendig.

Bereitgestellte Nachrichten können sowohl Nachrichten des Kraftfahrzeugs sein, beispielsweise Statusmeldungen (Fahrzeugzustand etc.) oder Handlungsempfehlungen oder -anweisungen (Wartungsempfehlung etc.). Bereitgestellte Nachrichten können jedoch auch Kommunikationsnachrichten sein, beispielsweise in Form von SMS- oder Email-Nachrichten etc. Durch Betätigen des virtuellen Bedienelements im Notifikationsbereich können die Nachrichten abgerufen und eingesehen werden. Die Nachrichten werden beispielsweise von einem Navigationssystem und/oder einem Bordcomputer des Kraftfahrzeugs und/oder einer Kommunikationseinrichtung im Kraftfahrzeugs bereitgestellt. Das Bereitstellen kann beispielsweise über einen Bussystem (z.B. Controller Area Network-CAN-Bus) oder eine sonstige Kommunikationsschnittstelle (z.B. Bluetooth, WLAN etc.) erfolgen.

Insbesondere ist vorgesehen, dass der ausgewählte Bereich statisch auf einer Anzeigefläche der Anzeige- und Bedieneinrichtung angeordnet ist, das heißt dass der ausgewählte Bereich stets dieselbe Position und die dieselben Maße aufweist. Es kann vorgesehen sein, dass in dem ausgewählten Bereich Bereiche ausschließlich zum Darstellen des Notifikationsbereichs und des Klimabereichs reserviert sind. Insbesondere sind eine Position des Notifikationsbereichs und eine Position des Klimabereichs innerhalb des ausgewählten Bereichs fixiert. Dies hat den Vorteil, dass ein Nutzer sich unabhängig von einem Kontext immer auf die gleichen Positionen beziehen kann, um eine Information zu erfassen oder eine Betätigung vorzunehmen.

Die berührungsempfindliche Anzeige- und Bedieneinrichtung kann insbesondere als Touchscreen ausgebildet sein. Die Steuereinrichtung steuert die Anzeige- und Bedieneinrichtung an, das heißt die Steuereinrichtung erzeugt insbesondere einen auf einer Anzeige der Anzeige- und Bedieneinrichtung dargestellten Inhalt und stellt diesen der Anzeigeund Bedieneinrichtung zur Darstellung bereit. Eingaben an der Anzeige- und Bedieneinrichtung, insbesondere ein Betätigen eines virtuellen Bedienelements, werden von der Steuereinrichtung verarbeitet und in entsprechende Steuerbefehle für Systeme des Kraftfahrzeugs umgewandelt, um die mit dem betätigten virtuellen Bedienelement verknüpfte Funktion auszulösen. Die Steuerbefehle können beispielsweise in Form digitaler Datenpakete über ein Bussystem an das jeweilige System übermittelt werden.

Die Steuereinrichtung kann als eine Kombination von Hardware und Software ausgebildet sein, beispielsweise als Programmcode, der auf einem Mikrocontroller oder Mikroprozessor ausgeführt wird.

Es ist vorgesehen, dass nach einem Betätigen des virtuellen Bedienelements zum Aufrufen der Klimakonfiguration ein reduziertes Klimakonfigurationsmenü auf der Anzeige- und Bedieneinrichtung dargestellt wird. Es ist hierbei insbesondere vorgesehen, dass im reduzierten Klimakonfigurationsmenü nur die wichtigsten Konfigurationsparameter des Klimasystems verändert werden können, beispielsweise eine Soll-Temperatur auf einer Fahrerseite und eine Soll-Temperatur auf einer Beifahrerseite. Der Vorteil ist, dass ein weiterer Inhalt, der auf der Anzeige- und Bedieneinrichtung dargestellt wird, beispielsweise eine zur Navigation dargestellte Straßenkarte, nicht von einem vollständigen Klimakonfigurationsmenü verdeckt wird und daher auch bei geöffnetem reduzierten Klimakonfigurationsmenü weiterhin teilweise oder vollständig dargestellt werden kann.

Ferner ist vorgesehen, dass eine vorgegebene auf der Anzeige- und Bedieneinrichtung mittels eines Betätigungselements ausgeführte Geste in einem Bereich, in dem das reduzierte Klimakonfigurationsmenü dargestellt ist, mittels der Steuereinrichtung erkannt wird und nach einem Erkennen der vorgegebenen Geste das reduzierte Klimakonfigurationsmenü auf das Klimakonfigurationsmenü erweitert wird. Hierdurch können die Vorteile des reduzierten Klimakonfigurationsmenüs mit den Vorteilen eines vollständigen Klimakonfigurationsmenüs, das alle Konfigurationsparameter eines Klimasystems des Kraftfahrzeugs umfasst, kombiniert werden. Zuerst wird durch Betätigen des virtuellen Bedienelements im Klimabereich das reduzierte Klimakonfigurationsmenü aufgerufen. Anschließend wird beispielsweise durch eine Wischgeste das reduzierte Klimakonfigurationsmenü auf das vollständige Klimakonfigurationsmenü erweitert. Anschließend kann ebenfalls eine Geste zum Schließen des (vollständigen) Klimakonfigurationsmenüs vorgesehen sein.

In einer Ausführungsform ist vorgesehen, dass der Notifikationsbereich und der Klimabereich in jedem Betriebszustand der Anzeige- und Bedienvorrichtung dargestellt werden. Dies ermöglicht einen Zugriff auf wichtige Informationen zu jedem Zeitpunkt, zu dem die Bedienvorrichtung bzw. das Kraftfahrzeug betrieben wird. Insbesondere wird der ausgewählte Bereich unabhängig von einem sonstigen auf der Anzeige- und Bedieneinrichtung dargestellten Inhalt dargestellt, sodass die Nachrichten zu jederzeit abgerufen werden können und die mindestens eine Klimainformation und das mindestens eine virtuelle Bedienelement zum Aufrufen der Klimakonfiguration jederzeit erfasst bzw. betätigt werden können.

In einer Ausführungsform ist vorgesehen, dass nach Betätigen des virtuellen Bedienelements zum Abrufen der mindestens einen bereitgestellten Nachricht eine Liste mit aktuellen Nachrichten dargestellt wird. Die in der Liste dargestellten Nachrichten können in einer Rangfolge angeordnet sein, beispielsweise auf Grundlage eines Nachrichtenalters und/oder einer Dringlichkeit und/oder einer Art der Nachrichten.

In einer nicht beanspruchten Ausführungsform ist vorgesehen, dass nach Betätigen des virtuellen Bedienelements zum Aufrufen der Klimakonfiguration ein Klimakonfigurationsmenü auf der Anzeige- und Bedieneinrichtung dargestellt wird. Dies ermöglicht einen schnellen Zugriff auf eine Klimakonfiguration des Kraftfahrzeugs. Da nur eine einzige Betätigungshandlung zum Aufrufen des Klimakonfigurationsmenüs notwendig ist, kann eine Bedienung eines Klimasystems des Kraftfahrzeugs besonders komfortabel und einfach erfolgen.

In einer Ausführungsform ist vorgesehen, dass der ausgewählte Bereich einen Anteil von weniger als 20 % einer gesamten Anzeigefläche der Anzeige- und Bedieneinrichtung überdeckt. Bevorzugt weist der ausgewählte Bereich einen Anteil von weniger als 15 %, besonders bevorzugt einen Anteil von weniger als 10 % der gesamten Anzeigefläche auf. Hierdurch wird eine für das Darstellen von Inhalt benutzte Anzeigefläche nicht unnötig durch den für den ausgewählten Bereich reservierten Anteil beschnitten.

In einer Ausführungsform ist vorgesehen, dass der Notifikationsbereich mindestens eine Farbinformation umfasst, wobei die mindestens eine Farbinformation in Abhängigkeit mindestens einer bereitgestellten Nachricht gewählt wird. Die Farbinformation kann beispielsweise auf Grundlage einer Anzahl von bereitgestellten Nachrichten gewählt werden. Beispielsweise kann eine Anzahl von Nachrichten, die noch nicht abgefragt wurden, mit ansteigender Anzahl durch einen Farbverlauf von Grün, über Gelb zu Rot kenntlich gemacht werden. Ferner kann die Farbinformation auch auf Grundlage einer Dringlichkeit der Nachrichten gewählt werden. Auf diese Weise können beispielsweise dringende Wartungsoder Serviceempfehlungen des Kraftfahrzeugs mit einer entsprechenden Farbe gekennzeichnet werden. Auch kann eine Rückmeldeanforderung an einen Nutzer mittels einer solchen Farbinformation gekennzeichnet werden. Beispielsweise kann immer dann, wenn eine Nachricht durch eine Aktion eines Nutzers quittiert werden muss, eine solche farbliche Kennzeichnung vorgenommen werden. Ein Nutzer kann dann sofort erkennen, dass eine Aktion als Reaktion auf die Nachricht erforderlich ist. Mehrere dieser Kriterien zum Festlegen der Farbinformation können auch miteinander kombiniert werden. Die Farbinformation wird beispielsweise dadurch kenntlich gemacht, dass das virtuelle Bedienelement seine Farbe auf Grundlage der gewählten Farbinformation wechselt, sodass ein Nutzer direkt eine entsprechende Information erfassen kann.

In einer Ausführungsform ist vorgesehen, dass in dem Notifikationsbereich eine Anzahlinformation auf Grundlage einer Anzahl von bereitgestellten Nachrichten dargestellt wird. Hierdurch kann einem Nutzer unmittelbar eine Information über noch nicht zur Kenntnis genommene bzw. noch nicht beantwortete Nachrichten vermittelt werden.

Merkmale zur Ausgestaltung der Bedienvorrichtung ergeben sich aus der Beschreibung von Ausgestaltungen des Verfahrens. Die Vorteile der Bedienvorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Bedienvorrichtung für ein Kraftfahrzeug;
- Fig. 2: eine schematische Darstellung eines auf einer Anzeige- und Bedieneinrichtung dargestellten Inhalts mit einem Notifikationsbereich und einem Klimabereich in einem ausgewählten Bereich;
- Fig. 3: eine schematische Darstellung eines auf einer Anzeige- und Bedieneinrichtung dargestellten Inhalts mit einem reduzierten Klimakonfigurationsmenü;
- Fig. 4: eine schematische Darstellung eines auf einer Anzeige- und Bedieneinrichtung dargestellten Inhalts zur Verdeutlichung einer Erweiterung eines reduzierten Klimakonfigurationsmenüs auf ein vollständiges Klimakonfigurationsmenü.

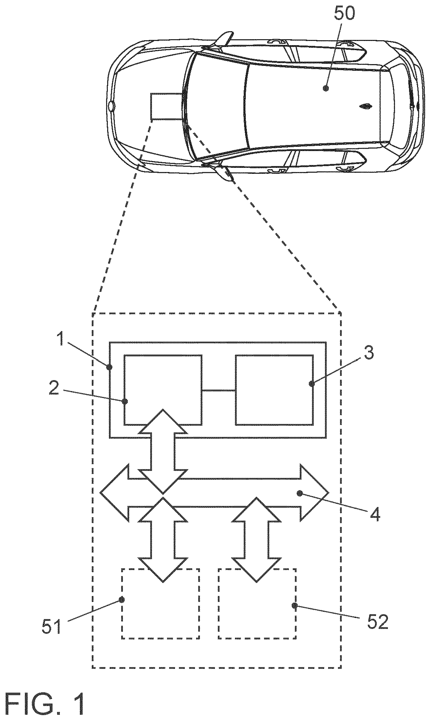

In Fig. 1 ist eine schematische Darstellung einer Ausführungsform der Bedienvorrichtung 1 für ein Kraftfahrzeug 50 gezeigt. Die Bedienvorrichtung 1 umfasst eine berührungsempfindliche Anzeige- und Bedieneinrichtung 3, beispielsweise in Form eines Touchscreens, und eine Steuereinrichtung 2 zum Steuern der Anzeige- und Bedieneinrichtung 3.

Die Steuereinrichtung 2 steuert die Anzeige- und Bedieneinrichtung 3 an, das heißt ein von der Anzeige- und Bedieneinrichtung 3 dargestellter Inhalt wird von der Steuereinrichtung 2 erzeugt und bereitgestellt und eine Betätigung auf der Anzeige- und Bedieneinrichtung 3 wird von der Steuereinrichtung 2 verarbeitet. Betätigungen auf der Anzeige- und Bedieneinrichtung 3 können beispielsweise von der Steuereinrichtung 2 in Befehle für Funktionen des Kraftfahrzeugs 50 umgesetzt werden und über einen Bussystem 4 an die entsprechenden Systeme übermittelt werden. Die Systeme können beispielsweise ein Bordcomputer 51 des Kraftfahrzeugs 50 oder eine Klimasteuerung 52 des Kraftfahrzeugs 50 sein.

Die Steuereinrichtung 2 steuert die Anzeige- und Bedieneinrichtung 3 an, sodass in einem ausgewählten Bereich der Anzeige- und Bedieneinrichtung 3 ein Notifikationsbereich und ein Klimabereich dargestellt werden. In dem Notifikationsbereich wird mindestens ein virtuelles Bedienelement zum Abrufen von bereitgestellten Nachrichten dargestellt. In dem Klimabereich wird mindestens eine Klimainformation und mindestens ein virtuelles Bedienelement zum Aufrufen einer Klimakonfiguration dargestellt.

Es kann vorgesehen sein, dass der Notifikationsbereich und der Klimabereich in jedem Betriebszustand der Anzeige- und Bedienvorrichtung 3 dargestellt werden.

Ferner kann vorgesehen sein, dass nach Betätigen des virtuellen Bedienelements zum Abrufen der mindestens einen bereitgestellten Nachricht eine Liste mit aktuellen Nachrichten dargestellt wird. Alternativ kann auch eine andere Form der Darstellung gewählt werden, beispielsweise eine kachelförmige Auflistung oder eine Darstellung in Form eines Nachrichtenkarussells.

Es kann bei einer nicht beanspruchten Ausführungsform vorgesehen sein, dass nach Betätigen des virtuellen Bedienelements zum Aufrufen der Klimakonfiguration ein Klimakonfigurationsmenü auf der Anzeige- und Bedieneinrichtung 3 dargestellt wird.

Es ist vorgesehen, dass nach einem Betätigen des virtuellen Bedienelements zum Aufrufen der Klimakonfiguration ein reduziertes Klimakonfigurationsmenü auf der Anzeige- und Bedieneinrichtung 3 dargestellt wird.

Ferner ist vorgesehen, dass eine vorgegebene auf der Anzeige- und Bedieneinrichtung 3 mittels eines Betätigungselements ausgeführte Geste in einem Bereich, in dem das reduzierte Klimakonfigurationsmenü dargestellt ist, mittels der Steuereinrichtung 2 erkannt wird und nach einem Erkennen der vorgegebenen Geste das reduzierte Klimakonfigurationsmenü auf das (vollständige) Klimakonfigurationsmenü erweitert wird.

Es kann vorgesehen sein, dass der ausgewählte Bereich einen Anteil von weniger als 20 % einer Anzeigefläche der Anzeige- und Bedieneinrichtung 3 überdeckt. Bevorzugt überdeckt der ausgewählte Bereich einen Anteil von weniger als 15 %, besonders bevorzugt überdeckt der ausgewählte Bereich einen Anteil von weniger als 10 %.

Ferner kann vorgesehen sein, dass der Notifikationsbereich mindestens eine Farbinformation umfasst, wobei die mindestens eine Farbinformation in Abhängigkeit mindestens einer bereitgestellten Nachricht gewählt wird. Beispielsweise kann die Farbinformation in Abhängigkeit eines Nachrichtenalters, einer Art und/oder einer Dringlichkeit einer Nachricht gewählt werden. Bei mehreren Nachrichten mit jeweils unterschiedlichen Farbinformationen kann eine Rangfolge erzeugt werden und nur die Farbinformation der ranghöchsten Nachricht berücksichtigt werden. Alternativ kann auch ein Mittelwert aus den Farbinformationen der Nachrichten gebildet und verwendet werden.

Es kann vorgesehen sein, dass in dem Notifikationsbereich eine Anzahlinformation auf Grundlage einer Anzahl von bereitgestellten Nachrichten dargestellt wird.

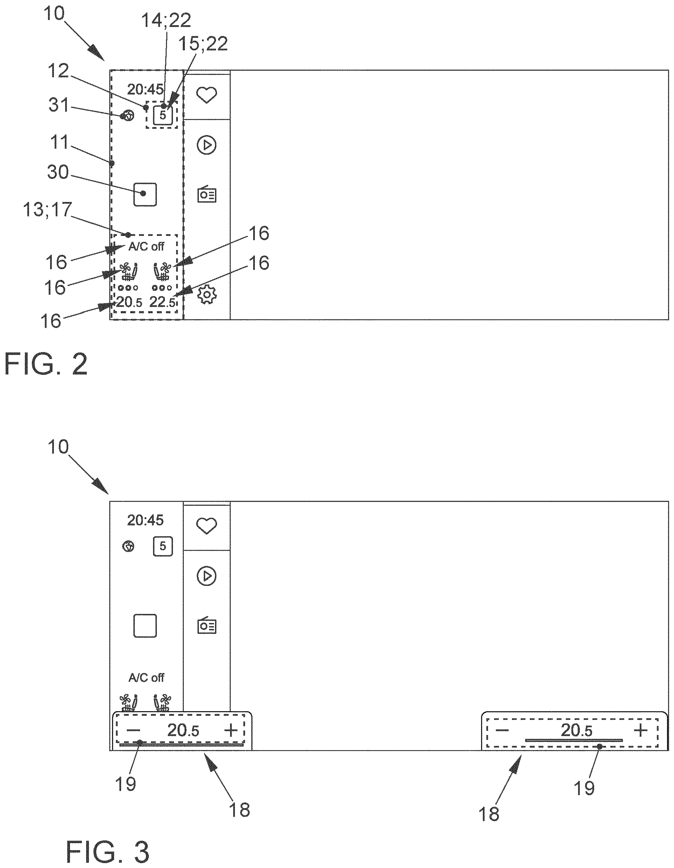

In Fig. 2 ist eine schematische Darstellung eines auf einer Anzeige- und Bedieneinrichtung angezeigten Inhalts 10 zur Verdeutlichung der Erfindung gezeigt. Auf einer linken Seite im angezeigten Inhalt 10 ist ein ausgewählter Bereich 11 dargestellt, der sich beispielsweise durch eine kontrastierende Farbgebung von dem restlichen auf der Anzeige- und Bedieneinrichtung dargestellten Inhalt abhebt. Dieser ausgewählte Bereich 11 umfasst einen Notifikationsbereich 12 und einen Klimabereich 13.

In dem Notifikationsbereich 12 ist ein virtuelles Bedienelement 14 zum Abrufen von mindestens einer bereitgestellten Nachricht dargestellt. Das virtuelle Bedienelement 14 ist in der dargestellten Ausführungsform als Rechteck mit abgerundeten Ecken ausgestaltet. Innerhalb des Rechtecks ist eine Anzahlzahlinformation 15 auf Grundlage einer Anzahl von bereitgestellten Nachrichten dargestellt. Im dargestellten Beispiel sind aktuell fünf Nachrichten vorhanden, welche durch Betätigen des virtuellen Bedienelements 14 abgerufen werden können. Wird das virtuelle Bedienelement 14 durch einen Nutzer mittels eines Betätigungselements, beispielsweise eines Fingers, betätigt, werden die bereitgestellten Nachrichten beispielsweise in Listenform dargestellt.

Es kann vorgesehen sein, dass der Notifikationsbereich 12 mindestens eine Farbinformation 22 umfasst, wobei die mindestens eine Farbinformation 22 in Abhängigkeit mindestens einer bereitgestellten Nachricht gewählt wird. Beispielsweise können sowohl das Rechteck als auch die Anzahlinformation 15 mit einer farblichen Kennzeichnung versehen sein.

In dem Klimabereich 13 sind Klimainformationen 16 dargestellt. Die Klimainformationen 16 umfassen einen Betriebszustand einer Klimaanlage ("A/C off"), Betriebszustände von Sitzheizungen auf einer Fahrer- und einer Beifahrerseite und Soll-Temperaturen auf der Fahrerund der Beifahrerseite. Ferner umfasst der Klimabereich 13 ein virtuelles Bedienelement 17, welches dieselbe Fläche wie der Klimabereich 13 umfasst. Wird das virtuelle Bedienelement 17 im Klimabereich 13 mittels eines Betätigungselements betätigt, so öffnet sich ein reduziertes Klimakonfigurationsmenü 18, welches schematisch in der Fig. 3 dargestellt ist. Das reduzierte Klimakonfigurationsmenü 18 umfasst virtuelle Bedienelemente 19 zum Einstellen einer Soll-Temperatur auf der Fahrer- und der Beifahrerseite.

Der ausgewählte Bereich 11 (Fig. 2) kann darüber hinaus noch weitere virtuelle Bedienelemente 30, 31 umfassen, wie beispielsweise eine "Home"-Taste, welche aus jedem beliebigen Betriebszustand der Anzeige- und Bedieneinrichtung einen Wechsel in ein Hauptmenü bewirkt, oder ein virtuelles Bedienelement 31 zum Aufrufen eines Webbrowsers.

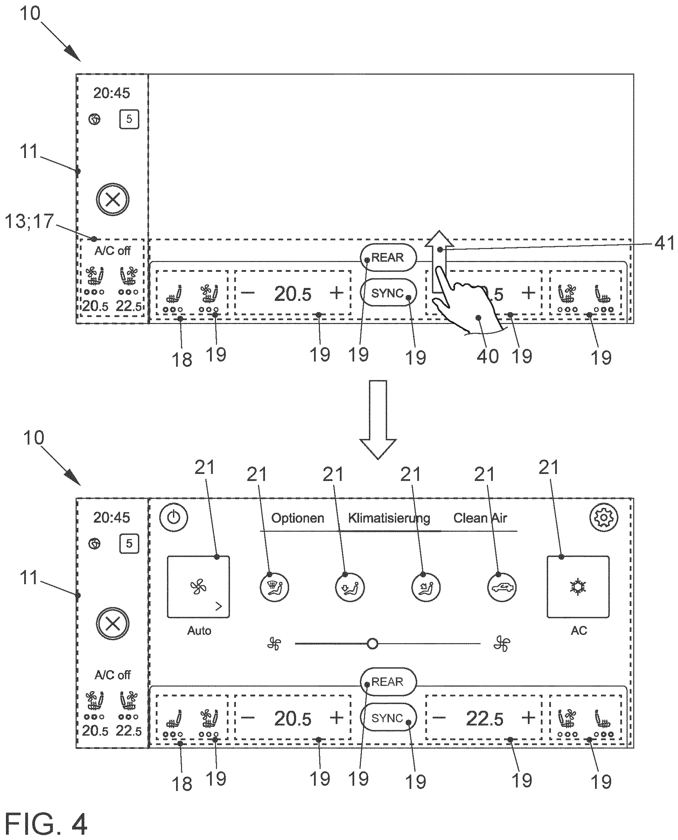

In Fig. 4 ist eine schematische Darstellung eines auf einer Anzeige- und Bedieneinrichtung dargestellten Inhalts 10 zur Verdeutlichung einer Erweiterung eines reduzierten Klimakonfigurationsmenüs 18 auf ein vollständiges Klimakonfigurationsmenü 20 gezeigt.

Nach einer Betätigung des virtuellen Bedienelements 17 im Klimabereich 13 wird ein reduziertes Klimakonfigurationsmenü 18 dargestellt (vgl. Fig. 4 oben). Das reduzierte Klimakonfigurationsmenü 18 umfasst mehrere virtuelle Bedienelemente 19, mit denen beispielsweise eine Sitzheizung oder eine Temperatur auf einer Fahrer- oder Beifahrerseite gesteuert werden können.

Es ist vorgesehen, dass eine vorgegebene auf der Anzeige- und Bedieneinrichtung mittels eines Betätigungselements 40 ausgeführte Geste 41 (z.B. Wischen, vgl. Fig. 4 oben) in einem Bereich, in dem das reduzierte Klimakonfigurationsmenü 18 dargestellt ist, mittels der Steuereinrichtung erkannt wird und nach einem Erkennen der vorgegebenen Geste 41 das reduzierte Klimakonfigurationsmenü 18 auf ein vollständiges Klimakonfigurationsmenü 20 erweitert wird (vgl. Fig. 4 unten). In dem vollständigen Klimakonfigurationsmenü 20 sind zusätzlich zu den bereits im reduzierten Klimakonfigurationsmenü 18 bereitgestellten virtuellen Bedienelementen 19 weitere virtuelle Bedienelemente 21 für weitere Funktionen eines Klimasystems des Kraftfahrzeugs konfigurierbar, wie beispielsweise ein Betriebsmodus ("Auto"/"Manuell"), eine Steuerung der Luftzirkulation und ein Betriebszustand einer Klimaanlage ("AC") des Kraftfahrzeugs.

Alternativ kann auch vorgesehen sein, dass das Betätigen des virtuellen Bedienelements 17 im Klimabereich 13 direkt zum Aufrufen und Darstellen des (vollständigen) Klimakonfigurationsmenüs 20 führt.

### Bezugszeichenliste

- 1: Bedienvorrichtung
- 2: Steuereinrichtung
- 3: Anzeige- und Bedieneinrichtung
- 4: Bussystem
- 10: angezeigter Inhalt
- 11: ausgewählter Bereich
- 12: Notifikationsbereich
- 13: Klimabereich
- 14: virtuelles Bedienelement
- 15: Anzahlinformation
- 16: Klimainformation
- 17: virtuelles Bedienelement
- 18: reduziertes Klimakonfigurationsmenü
- 19: virtuelles Bedienelement
- 20: Klimakonfigurationsmenü
- 21: virtuelles Bedienelement
- 22: Farbinformation
- 30: weiteres virtuelles Bedienelement
- 31: weiteres virtuelles Bedienelement
- 40: Betätigungselement
- 41: Geste
- 50: Kraftfahrzeug
- 51: Bordcomputer
- 52: Klimasteuerung

## Patentansprüche

1. Verfahren zum Betreiben einer Bedienvorrichtung (1) für ein Kraftfahrzeug (50), wobei die Bedienvorrichtung (1) eine berührungsempfindliche Anzeige- und Bedieneinrichtung (3) und eine Steuereinrichtung (2) zum Steuern der Anzeige- und Bedieneinrichtung (3) umfasst, wobei in einem ausgewählten Bereich (11) auf der Anzeige- und Bedieneinrichtung (3) ein Notifikationsbereich (12) dargestellt wird, wobei in dem Notifikationsbereich (12) mindestens ein virtuelles Bedienelement (14) zum Abrufen von mindestens einer bereitgestellten Nachricht dargestellt wird, und wobei in dem ausgewählten Bereich (11) ferner ein Klimabereich (13) dargestellt wird, wobei in dem Klimabereich (13) mindestens eine Klimainformation (16) und mindestens ein virtuelles Bedienelement (14) zum Aufrufen einer Klimakonfiguration dargestellt werden,
wobei eine vorgegebene auf der Anzeige- und Bedieneinrichtung (3) mittels eines Betätigungselements (40) ausgeführte Geste (41) mittels der Steuereinrichtung (2) erkannt wird,
**dadurch gekennzeichnet, dass** nach einem Betätigen des virtuellen Bedienelements (17) zum Aufrufen der Klimakonfiguration ein reduziertes Klimakonfigurationsmenü (18) auf der Anzeige- und Bedieneinrichtung (3) dargestellt wird,
wobei die vorgegebene ausgeführte Geste (41) in einem Bereich, in dem das reduzierte Klimakonfigurationsmenü (18) dargestellt ist, erkannt wird und nach einem Erkennen der vorgegebenen Geste (41) das reduzierte Klimakonfigurationsmenü (18) auf das Klimakonfigurationsmenü (20) erweitert wird.

2. Verfahren nach Anspruch 1, **dadurch gekennzeichnet, dass** der Notifikationsbereich (12) und der Klimabereich (13) in jedem Betriebszustand der Anzeige- und Bedienvorrichtung (3) dargestellt werden.

3. Verfahren nach Anspruch 1 oder 2, **dadurch gekennzeichnet, dass** nach Betätigen des virtuellen Bedienelements (14) zum Abrufen der mindestens einen bereitgestellten Nachricht eine Liste mit aktuellen Nachrichten dargestellt wird.

4. Verfahren nach einem der vorangegangenen Ansprüche, **dadurch gekennzeichnet, dass** der ausgewählte Bereich (11) einen Anteil von weniger als 20 % einer gesamten Anzeigefläche der Anzeige- und Bedieneinrichtung (3) überdeckt.

5. Verfahren nach einem der vorangegangenen Ansprüche, **dadurch gekennzeichnet, dass** der Notifikationsbereich (12) mindestens eine Farbinformation (22) umfasst, wobei die mindestens eine Farbinformation (22) in Abhängigkeit mindestens einer bereitgestellten Nachricht gewählt wird.

6. Verfahren nach einem der vorangegangenen Ansprüche, **dadurch gekennzeichnet, dass** in dem Notifikationsbereich (12) eine Anzahlinformation (15) auf Grundlage einer Anzahl von bereitgestellten Nachrichten dargestellt wird.

7. Bedienvorrichtung (1) für ein Kraftfahrzeug (50), umfassend:
eine berührungsempfindliche Anzeige- und Bedieneinrichtung (3) und
eine Steuereinrichtung (2) zum Steuern der Anzeige- und Bedieneinrichtung (3),
wobei die Steuereinrichtung (2) derart ausgebildet ist, in einem ausgewählten Bereich (11) der Anzeige- und Bedieneinrichtung (3) einen Notifikationsbereich (12) und einen Klimabereich (13) darzustellen, und
in dem Notifikationsbereich (12) mindestens ein virtuelles Bedienelement (14) zum Abrufen von bereitgestellten Nachrichten darzustellen und
in dem Klimabereich (13) mindestens eine Klimainformation (16) und mindestens ein virtuelles Bedienelement (17) zum Aufrufen einer Klimakonfiguration darzustellen,
und eine vorgegebene auf der Anzeige- und Bedieneinrichtung (3) mittels eines Betätigungselements (40) ausgeführte Geste (41) zu erkennen,
**dadurch gekennzeichnet, dass** die Steuereinrichtung ferner derart ausgebildet ist, nach einem Betätigen des virtuellen Bedienelements (17) zum Aufrufen der Klimakonfiguration ein reduziertes Klimakonfigurationsmenü (18) auf der Anzeige- und Bedieneinrichtung (3) darzustellen, und
die vorgegebene ausgeführte Geste (41) in einem Bereich, in dem das reduzierte Klimakonfigurationsmenü (18) dargestellt ist, zu erkennen und nach einem Erkennen der vorgegebenen Geste (41) das reduzierte Klimakonfigurationsmenü (18) auf das Klimakonfigurationsmenü (20) zu erweitern.

## Claims

1. Method for operating an operating apparatus (1) for a motor vehicle (50), the operating apparatus (1) comprising a touch-sensitive display and operating device (3) and a control device (2) for controlling the display and operating device (3), a notification region (12) being shown in a selected region (11) on the display and operating device (3), at least one virtual operating element (14) being shown in the notification region (12) for retrieving at least one provided message, and an air-conditioning region (13) also being shown in the selected region (11), at least one item of air-conditioning information (16) and at least one virtual operating element (14) for retrieving an air-conditioning configuration being shown in the air-conditioning region (13), a predetermined gesture (41), carried out on the display and operating device (3) by means of an actuating element (40), being detected by means of the control device (2),
**characterized in that,** after actuation of the virtual operating element (17) for retrieving the air-conditioning configuration, a reduced air-conditioning configuration menu (18) is shown on the display and operating device (3),
the carried-out specified gesture (41) being detected in a region in which the reduced air-conditioning configuration menu (18) is shown, and, after detection of the specified gesture (41), the reduced air-conditioning configuration menu (18) being expanded to the air-conditioning configuration menu (20).

2. Method according to claim 1, **characterized in that** the notification region (12) and the air-conditioning region (13) are shown in each operating state of the display and operating apparatus (3).

3. Method according to claim 1 or 2, **characterized in that,** after actuation of the virtual operating element (14) for retrieving the at least one provided message, a list of current messages is shown.

4. Method according to any of the preceding claims, **characterized in that** the selected region (11) covers a proportion of less than 20% of an entire display surface of the display and operating device (3).

5. Method according to any of the preceding claims, **characterized in that** the notification region (12) comprises at least one item of color information (22), the at least one item of color information (22) being selected on the basis of at least one provided message.

6. Method according to any of the preceding claims, **characterized in that** an item of number information (15) is shown in the notification region (12) on the basis of a number of provided messages.

7. Operating apparatus (1) for a motor vehicle (50), comprising:
a touch-sensitive display and operating device (3) and a control device (2) for controlling the display and operating device (3), the control device (2) being designed to show a notification region (12) and an air-conditioning region (13) in a selected region (11) of the display and operating device (3), and
to show at least one virtual operating element (14) for retrieving provided messages in the notification region (12), and
to show at least one item of air-conditioning information (16) and at least one virtual operating element (17) for retrieving an item of air-conditioning configuration in the air-conditioning region (13), and to identify a predetermined gesture (41) carried out on the display and operating device (3) by means of an actuating element (40),
**characterized in that** the control device is further designed to display a reduced air-conditioning configuration menu (18) on the display and operating device (3) after actuation of the virtual operating element (17) for retrieving the air-conditioning configuration, and
to identify the carried-out specified gesture (41) in a region in which the reduced air-conditioning configuration menu (18) is shown, and, after identification of the specified gesture (41), to expand the reduced air-conditioning configuration menu (18) to the air-conditioning configuration menu (20).

## Revendications

1. Procédé permettant de faire fonctionner un dispositif de manipulation (1) destiné à un véhicule automobile (50), dans lequel le dispositif de manipulation (1) comprend un appareil d'affichage et de manipulation (3) tactile et un appareil de commande (2) permettant de commander l'appareil d'affichage et de manipulation (3), dans lequel une zone de notification (12) est représentée dans une zone sélectionnée (11) sur l'appareil d'affichage et de manipulation (3), dans lequel au moins un élément de manipulation virtuel (14) permettant de récupérer au moins un message fourni est représenté dans la zone de notification (12), et dans lequel une zone de climatisation (13) est en outre représentée dans la zone sélectionnée (11), dans lequel au moins une information de climatisation (16) et au moins un élément de manipulation virtuel (14) permettant d'appeler une configuration de climatisation sont représentés dans la zone de climatisation (13), dans lequel un geste (41) prédéfini et exécuté sur l'appareil d'affichage et de manipulation (3) au moyen d'un élément d'actionnement (40) est reconnu au moyen de l'appareil de commande (2),
**caractérisé en ce qu'**un menu de configuration de climatisation réduit (18) est représenté sur l'appareil d'affichage et de manipulation (3) après un actionnement de l'élément de manipulation virtuel (17) permettant d'appeler la configuration de climatisation,
dans lequel le geste (41) prédéfini et exécuté est reconnu dans une zone dans laquelle le menu de configuration de climatisation réduit (18) est représenté et, après une reconnaissance du geste (41) prédéfini, le menu de configuration de climatisation réduit (18) est étendu au menu de configuration de climatisation (20).

2. Procédé selon la revendication 1, **caractérisé en ce que** la zone de notification (12) et la zone de climatisation (13) sont représentées dans chaque état de fonctionnement du dispositif d'affichage et de manipulation (3).

3. Procédé selon la revendication 1 ou 2, **caractérisé en ce qu'**une liste de messages actuels est représentée après l'actionnement de l'élément de manipulation virtuel (14) permettant de récupérer l'au moins un message fourni.

4. Procédé selon l'une des revendications précédentes,
**caractérisé en ce que** la zone sélectionnée (11) recouvre une proportion inférieure à 20 % d'une surface d'affichage totale de l'appareil d'affichage et de manipulation (3).

5. Procédé selon l'une des revendications précédentes,
**caractérisé en ce que** la zone de notification (12) comprend au moins une information de couleur (22), dans lequel l'au moins une information de couleur (22) est sélectionnée en fonction d'au moins un message fourni.

6. Procédé selon l'une des revendications précédentes,
**caractérisé en ce qu'**une information de nombre (15) est représentée dans la zone de notification (12) sur la base d'un nombre de messages fournis.

7. Dispositif de manipulation (1) destiné à un véhicule automobile (50), comprenant :
un appareil d'affichage et de manipulation (3) tactile et un appareil de commande (2) permettant de commander l'appareil d'affichage et de manipulation (3), dans lequel l'appareil de commande (2) est configuré de manière à représenter, dans une zone sélectionnée (11) de l'appareil d'affichage et de manipulation (3), une zone de notification (12) et une zone de climatisation (13), et
à représenter, dans la zone de notification (12), au moins un élément de manipulation virtuel (14) permettant de récupérer des messages fournis et
à représenter, dans la zone de climatisation (13), au moins une information de climatisation (16) et au moins un élément de manipulation virtuel (17) permettant d'appeler une configuration de climatisation, et à reconnaître un geste (41) prédéfini et exécuté sur l'appareil d'affichage et de manipulation (3) au moyen d'un élément d'actionnement (40),
**caractérisé en ce que** l'appareil de commande est en outre configuré pour représenter un menu de configuration de climatisation réduit (18) sur l'appareil d'affichage et de manipulation (3) après un actionnement de l'élément de manipulation virtuel (17) permettant d'appeler la configuration de climatisation, et
pour reconnaître le geste (41) prédéfini et exécuté dans une zone dans laquelle le menu de configuration de climatisation réduit (18) est représenté et, après une reconnaissance du geste (41) prédéfini, pour étendre le menu de configuration de climatisation réduit (18) au menu de configuration de climatisation (20).
